Europäisches Patentamt

European Patent Office

Office européen des brevets

(11) Veröffentlichungsnummer: **0 206 204**
**B1**

(12) **EUROPÄISCHE PATENTSCHRIFT**

(45) Veröffentlichungstag der Patentschrift: **10.10.90**

(21) Anmeldenummer: **86108199.0**

(22) Anmeldetag: **16.06.86**

(51) Int. Cl.⁵: **B 01 D 45/08, F 24 C 15/20**

(54) Abscheider für gasförmige Fluide.

(30) Priorität: **19.06.85 DE 3521927**
**08.10.85 DE 3535911**

(43) Veröffentlichungstag der Anmeldung:
**30.12.86 Patentblatt 86/52**

(45) Bekanntmachung des Hinweises auf die
Patenterteilung:
**10.10.90 Patentblatt 90/41**

(84) Benannte Vertragsstaaten:
**AT BE CH DE FR GB IT LI LU NL SE**

(56) Entgegenhaltungen:
**DE-A-2 720 201**
**DE-A-3 227 005**
**FR-A-2 388 532**

(73) Patentinhaber: **Gutermuth, Paul, sen.**
**Augustastrasse 48**
**D-6456 Langenselbold (DE)**

(72) Erfinder: **Gutermuth, Paul, sen.**
**Augustastrasse 48**
**D-6456 Langenselbold (DE)**

(74) Vertreter: **Stoffregen, Hans-Herbert, Dr. Dipl.-
Phys. et al**
**Salzstrasse 11a**
**D-6450 Hanau/Main 1 (DE)**

Courier Press, Leamington Spa, England.

**Beschreibung**

Die Erfindung bezieht sich auf einen Abscheider für gasförmige Fluide wie Kühlfluide, Ölnebel, Fettnebel, Schmutzpartikel aufweisende Luft mit in zumindest zwei gegenüberliegenden Reihen angeordneten im Querschnitt offenen, rinnenförmigen ersten und zweiten Profilteilen, wobei die freien Längskanten der Ränder der ersten Profilteile die freien Längskanten der Ränder der zweiten Profilteile überlappen.

Ein entsprechender Abscheider ist der DE-PS 26 41 765 oder der DE-AS 27 18 611 zu entnehmen. Die einzelnen auch als Rinnen zu bezeichnenden Profilteile sind dabei fest in einem Rahmen eingebaut. Um zwischen den Profilteilen abgeschiedenen Schmutz zu entfernen, muß der gesamte Abscheider von zum Beispiel einer abgehängten Decke bzw. aus einem mehrere Abscheiderplatten aufnehmenden Gehäuse entfernt und gereinigt werden. In der CH-PS 550 018 wird ein Abscheider beschrieben, bei dem sich die Ränder der einanderzugewandten rinnenartigen Profilteile überlappen, ohne daß zwischen diesen die Strömungsgeschwindigkeit der Fluide beeinflussende Kammern gebildet sind. Allerdings sind die Profilteile einer jeden Reihe von einem Rahmen aufgenommen, der getrennt von dem anderen entfernt werden kann. Dadurch ist eine gewisse Vereinfachung der Reinigung gegeben. Dennoch ist insbesondere bei großflächigen Abscheidern nach wie vor eine Unhandlichkeit vorhanden, die unerwünscht ist.

Aufgabe der vorliegenden Erfindung ist es zum einen, einen Abscheider der eingangs genannten Art so auszubilden, daß eine erhöhte Abscheidung möglich ist. Auch liegt der Erfindung die Aufgabe zugrunde, daß der Abscheider, also die Profilteile problemlos gereinigt werden kann, und daß ohne aufwendige Maßnahmen Abscheider unterschiedlicher Flächen hergestellt werden können.

Die Aufgabe wird zum einen erfindungsgemäß dadurch gelöst, daß das Profilteil zur Bildung von Kammern einen im Scheitelbereich der Innenfläche ausgehenden sich in Richtung der Profilteilöffnung und entlang seiner Längsachse verlaufenden Vorsprung aufweist. Durch das Vorhandensein des als Innenvorsprung zu bezeichnenden von dem Scheitelbereich der Innenfläche abragenden vorzugsweise im Schnitt tropfenoder knaufartig ausgebildeten Vorsprungs werden zusätzliche Kammern im Bereich eines Profilteils bzw. zu den in das Profilteil eingreifenden Ränder benachbarter Profilteile zur Verfügung gestellt, wodurch eine weitergehende Beeinflussung der Strömungsgeschwindigkeit der durch den Abscheider strömenden Fluide erfolgt, wodurch wiederum der Abscheidergrad unerwarteterweise stark erhöht wird.

Sofern jedes Profilteil derart rinnenförmig ausgebildet ist, daß sich die Ränder der in den Reihen angeordneten Profilteile mit Abstand derart hintergreifen, daß sich zwischen den Verengungen der Ränder eine die Strömungsgeschwindigkeit der Fluide beeinflussende Kammer bildet, werden durch den Vorsprung zwei weitere Kammern gebildet, durch die die Fluide beim Durchströmen eine Beruhigung bzw. Beschleunigung erfahren, so daß sich ein mehrstufiges Zyklonsystem ergibt.

In Ausgestaltung der Erfindung sind die Außenflächen der Vorsprünge zumindest abschnittsweise profiliert durch z.B. Vorsprünge, Aussparungen oder Winkel zueinander beschreibende Flächenabschnitte, wodurch eine zusätzliche Verwirbelung erfolgt. Diese bewirkt gleichzeitig eine Selbstreinigung der Flächen der Vorsprünge. Vorzugsweise ist diese Strukturierung im Bereich des vorderen freien Endes der Vorsprünge vorgesehen.

Auch kann die Innen- und/oder Außenfläche eines jeden Profilteils zumindest abschnittsweise eine Strukturierung aufweisen, um ebenfalls für eine zusätzliche Verwirbelung und damit erhöhte Abscheidung zu sorgen. Auch diese Profilierung kann durch Vorsprünge, Aussparungen, Wellenstruktur oder Winkel zueinander beschreibende Flächenabschnitte gebildet werden.

Zum anderen wird die Aufgabe der Erfindung dadurch gelöst, daß jedes Profilteil lösbar in dem Abscheider angeordnet ist. Durch die Lösbarkeit des Profilteils ist ein einfaches Entfernen und damit zum Beispiel Säubern und Erneuern möglich. Auch brauchen die einzelnen Profilteile nur im gewünschten Umfang abgelängt zu werden, um z.B. in einen vorhandenen Rahmen eingesetzt zu werden. Durch die lösbare Anordnung der einzelnen Profilteile in dem Abscheider selbst besteht außerdem die Möglichkeit, daß die Profilteile um ihre Längsachsen gedreht werden können, wodurch wiederum eine Einstellbarkeit der die Strömungsgeschwindigkeit beeinflussenden Kammern erfolgt. Es kann demzufolge in gewünschten Bereichen des Abscheiders eine schwerpunktmäßige Abscheidung erfolgen.

Die Profilteile selbst können im Schnitt bogenförmig, V-förmig oder U-förmig ausgebildet sein. Dabei ist insbesondere eine sich über mehr als 180° erstreckende Bogenform hervorzuheben, so daß sich die Ränder zur Bildung weiterer Kammern hintergreifen.

Ferner zeichnet sich die Erfindung dadurch aus, daß der Vorsprung und/oder die Profilteile hohl ausbildbar sind bzw. daß das Profilteil durch fest oder lösbar mit dem Profilteil verbindbare Rohrelemente kühlbar ist, von denen eines den Vorsprung bildet. Dabei sind die Rohrelemente von Medien einstellbarer Temperatur durchströmbar. Als Medium kommt Wasser oder ein Gas wie Dampf oder Kühlluft in Frage.

Um ein einfaches Befestigen der Profilteile in dem Abscheider zu ermöglichen, sind Halteelemente vorgesehen, die derart ausgebildet sind, daß sie die mit der Öffnung den Fluiden zugewandten Profilteile abschnittsweise und zumindest teilweise von der Außenfläche umgreifen. Die mit den Außenflächen den zu reinigenden Gasen zugewandten Profilteile werden durch teilweises Umfassen des Innenvorsprungs befestigt.

Dabei sind zumindest die Bereiche des Halteelementes elastisch ausgebildet, die die Profilteile aufnehmen. Die Halteelemente selbst können von zum Beispiel Metallschienen aufgenommen werden, die ihrerseits Abschnitte aufweisen, die die Stirnbereiche der Profilteile abdecken. Dabei können die die Halteelemente aufnehmenden Schienen derart ausgebildet sein, daß sie im gewünschten Umfang gleichsinnig verstellbar sind, so daß demzufolge die Abscheiderflächen in Bezug auf die hindurchtretenden Fluide einstellbar sind. Dabei ist eine Konstruktion möglich, bei der die die Halteelemente aufnehmenden Schienen derart angeordnet sind, daß der Abscheider zwei einen spitzen Winkel einschließende Abscheideflächen umfaßt, deren Neigungswinkel einstellbar sind.

Dabei können die Halteelemente zum Beispiel aus Gummi, Kunststoff oder Metall bestehen und in einer Art Leiste ausgebildet sein, die die erforderlichen Ausnehmungen zum Wechselwirken mit den Profilteilen aufweisen. In besonders hervorzuhebender eigenerfinderischer Ausgestaltung besteht jedoch die Halterung für die Profilteile aus aneinanderreihbaren Einzelelementen, die jeweils von einem Basiselement ausgehende und zu diesem abgewinkelte und Federeigenschaften aufweisende streifenförmige erste und zweite Abschnitte umfassen, wobei die ersten Abschnitte die mit den Öffnungen den aufsteigenden Fluiden zugewandten Profilteile von außen teilweise umfassen und die zweiten Abschnitte mit ihren Endbereichen die inneren Vorsprünge der mit ihren Außenflächen den aufsteigenden Fluiden zugewandten Profilteilen zu deren Befestigung aufnehmen. Durch eine entsprechende Ausgestaltung der Halterung brauchen die Einzelelemente entsprechend der Anzahl der für einen Abscheider erforderlichen Profilteile nur aneinandergereiht werden, um so problemlos die Profilteile lösbar anzuordnen. Dabei gewährleisten die Federeigenschaften der streifenförmigen von der Grundfläche abgewinkelten Abschnitte eine sichere und ohne Werkzeuge lösbare Befestigung.

Durch den erfindungsgemäßen Vorschlag wird demzufolge ein Abscheider zur Verfügung gestellt, dessen Einzelelemente nicht starr in einen Rahmen festgelegt sind. Vielmehr können die Abscheider problemlos gewünschte Flächen aufweisen. Hierzu ist es nur erforderlich, daß die Profilteile im gewünschten Umfang abgelängt werden, um dann in den Halterungen lösbar befestigt zu werden. Hierdurch ergibt sich auch der Vorteil, daß durch Entfernen nur einzelner Profilteile ein problemloses und mit den Augen sichtbares Säubern des Abscheiders in allen Bereichen erfolgen kann. Durch das Vorhandensein der Innenvorsprünge wird zum einen die Strömungsgeschwindigkeit der mit Partikeln bzw. Fluiden verunreinigten Luft zwischen den Profilteilen dahingehend positiv beeinflußt, daß ein erhöhter Abscheidegrad erfolgt, und zum anderen erfährt das Profilteil selbst eine Eigensteifigkeit, so daß gefahrlos Abscheider großer Abmessungen zur Verfügung gestellt werden können, die der erfindungsgemäßen Lehre gehorchen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von in der Zeichnung dargestellten bevorzugten Ausführungsbeispielen.

Es zeigen:

Fig. 1 eine erste Ausführungsform eines Abscheiders im Ausschnitt und auseinandergezogen,

Fig. 2 eine zweite Ausführungsform im Ausschnitt und auseinandergezogen,

Fig. 3 eine Detaildarstellung eines Profilteils mit dieses aufnehmendem Halteelement im Schnitt,

Fig. 4 eine Schnittdarstellung eines Profilelementes mit Halterung nach einer weiteren Ausführungsform,

Fig. 5 eine perspektivische Teilansicht eines Abscheiders, teilweise weggebrochen,

Fig. 6 eine Halterung für Profilteile in Detaildarstellung,

Fig. 7 und 8 weitere Ausführungsformen von Abscheidern,

Fig. 9 eine weitere Ausführungsform eines Profilteils im Schnitt,

Fig. 10-16 verschiedene Ausführungsformen von Abscheidern perspektivisch dargestellt und im Ausschnitt,

Fig. 17 eine Detaildarstellung eines kaskadenförmig aufgebauten Abscheiders,

Fig. 18 eine weitere Ausführungsform eines im gewünschten Umfang temperierbaren Abscheiders im Ausschnitt und zum Teil auseinandergezogen,

Fig. 19 eine Schnittdarstellung entlang der Linie A—A in Fig. 18,

Fig. 20 eine weitere Ausführungsform eines Halteelements,

Fig. 21 eine aus mehreren Halteelementen zusammengesetzte Halterung und

Fig. 22 eine Aufnahmeschiene für Halteelemente nach Fig. 20.

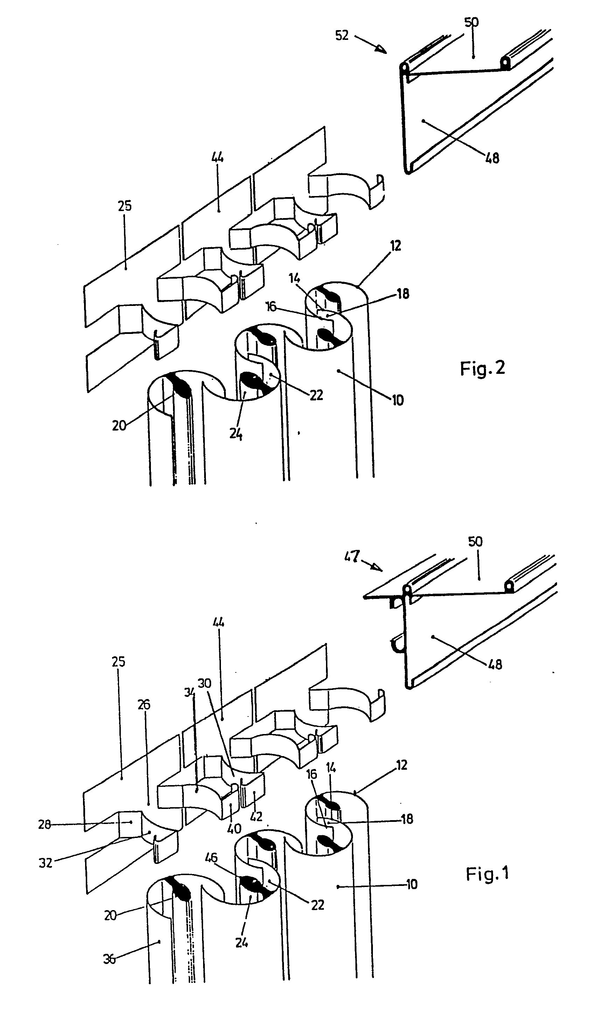

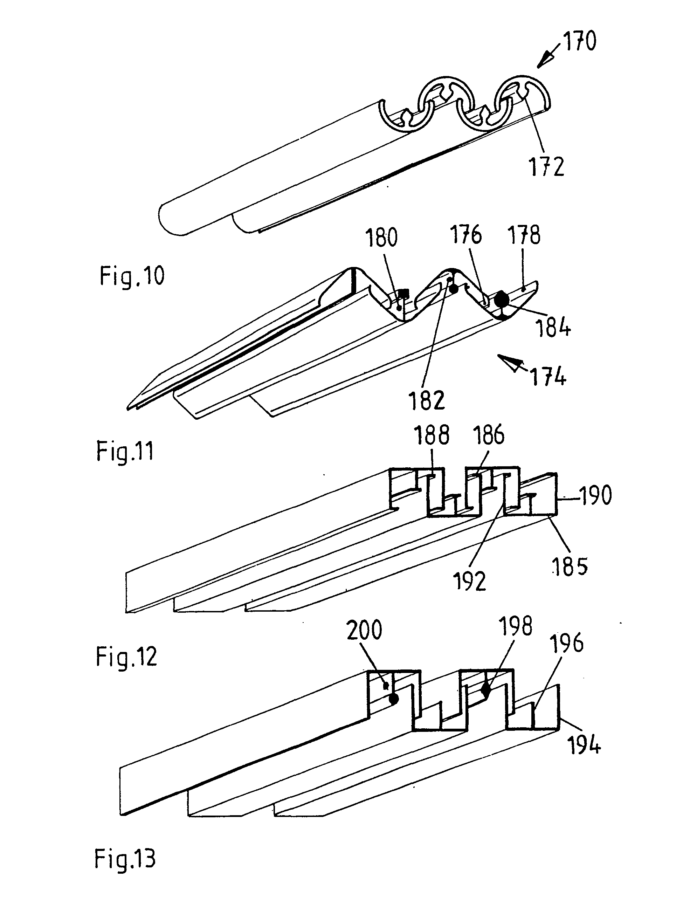

In den Fig. 1 und 2 sind Ausschnitte eines erfindungsgemäßen Abscheiders dargestellt, der rinnenförmige offene Profilteile 10, 12 umfaßt, deren Ränder 14, 16 derart hintergreifen, daß sich zwischen den Verengungen der Ränder Kammern 18 ausbilden. (Diese sind jedoch nicht notwendigerweise erforderlich wie die Darstellung nach Fig. 13 verdeutlicht.) Ferner weisen die Profilteile 10, 12 von der Innenfläche ausgehende in Richtung der Längsachse verlaufende Vorsprünge 20, 46 auf, wodurch weitere Kammern 22, 24 zu der angrenzenden Innenfläche bzw. zu dem Rand des angrenzenden Profilteils gebildet werden. Die in Reihen angeordneten ineinandergreifenden Profilteile 10, 12 dienen nun zum Reinigen von gasförmigen Fluiden wie zum Beispiel Kühlfluiden, Ölnebeln, Schmutzpartikel aufweisender Luft und werden zu sogenannten Abscheidern zusammengesetzt. Dadurch, daß durch die hintergreifenden Ränder 16 und 18 und zusätzlich durch die Vorsprünge 20 Kammern 18, 22 und 24 gebildet werden, die von den Fluiden durchströmt werden, erfolgt eine Beeinflussung der Strömungsgeschwindigkeit in der Art, daß eine erhöhte Abscheidung erfolgt.

Die auch als knaufartig zu bezeichnenden Vorsprünge 20, 46 dienen dabei nicht nur der Ausbildung weiterer auf die Fluide einwirkende Strömungskammern, sondern verleihen jedem Profilteil 10, 12 gleichzeitig eine Steifigkeit. Dadurch können Profilteile 10, 12 großer Längen ohne zusätzliche Unterstützungen von Halteelementen aufgenommen werden, von denen bevorzugte Ausführungsformen den Fig. 1 und 2 zu entnehmen sind.

Dabei besteht jedes Halteelement 25, 44 aus einem plattenförmigen Basiselement 26, von dem streifenförmige Abschnitte 28 und 30 ausgehen und derart abgewinkelt sind, das einanderzugewandte konkav ausgebildete Abschnitte 32 bzw. 34 zumindest abschnittsweise die Außenfläche 36 der Profilteile 12 umfaßt, deren Öffnung den Fluiden zugewandt ist. Auch sind die von dem Basiselement 26 abgewinkelten Abschnitte 28 und 30 federnd ausgebildet, um so eine sichere Aufnahme der Profilteile 12 zu gewährleisten. Die freien Enden der streifenförmigen Abschnitte 28 und 30 sind voneinander weggerichtet, verlaufen also in etwa parallel zu der Basisplatte 26. Dabei ist der Abstand der einanderzugewandten Endabschnitte 40, 42 von zwei aufeinanderfolgenden Halteelementen 25, 44 so gewählt, daß der in Längsrichtung der Innenfläche des Profilteils 10 verlaufende Vorsprung 46 erfaßt wird. Dabei unterstützt die im Schnitt knaufartig gewählte Form des Vorsprungs 46 das Festhalten zwischen den Abschnitten 40, 42 der Halteelemente 25, 44. Die einzelnen Halteelemente 25, 44 müssen zur Montage nunmehr nur in einer Schiene 48 einer Halterung 47 aneinandergereiht werden, um die Lagefixierung zu gewährleisten. Die Halterung 47 weist ferner einen von der Schiene 48 abgewinkelten Schenkel 50 auf, der die Profilteile 10, 12 im Stirnbereich abdeckt, so daß die durch die Profilteile 10, 12 strömenden Fluide nicht im Seitenbereich austreten können. Die Profilteile 10, 12 sind folglich lösbar in den in der Halterung 47 aneinandergereihten Einzelelementen 25, 44 festgelegt, wodurch ein problemloses Reinigen bzw. Erneuern von gegebenenfalls beschädigten Profilteilen 10, 12 möglich ist. Ferner sind die mit der Öffnung den Fluiden zugewandte Profilteile 10, 12 um Ihre Längsachse verschiebbar ausgebildet, wodurch eine weitere Beeinflussung der von den Fluiden durchströmten Kammerquerschnitte ermöglicht wird.

Die Ausführungsformen der Fig. 1 und 2 unterscheiden sich grundsätzlich nur in der Form der Halterungen 47 bzw. 52, ohne ansonsten essentielle Unterschiede aufzuweisen. Daher sind auch für gleiche Elemente gleiche Bezugszeichen gewählt. Unabhängig davon wird durch die Konstruktion der Profilteile 10 und 12 und deren Halteelemente 25, 44 bzw. Halterung 47, 52 ein Abscheider zur Verfügung gestellt, der problemlos auf gewünschte Dimensionierungen ausgelegt werden kann. Dies wird dadurch möglich, daß im erforderlichen Umfang die Anzahl der Halteelemente 25, 44 aneinandergereiht werden und die Profilteile 10, 12 in der erforderlichen Länge geschnitten werden.

Die Halteelemente 25, 44, die die als Federelemente zu bezeichnenden Abschnitte 28, 30 umfassen, können zum Beispiel aus Aluminium, Edelstahl, Federstahl oder auch Kunststoff bestehen. Gleiches gilt bezüglich der Profilteile 10, 12, die stranggepreßte Teile oder gespritzte Teile aus Kunststoff sein können.

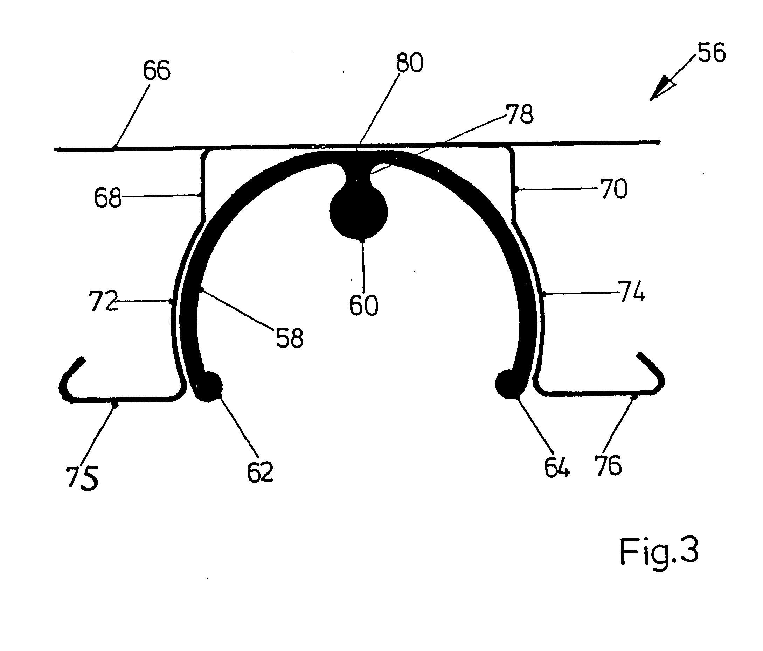

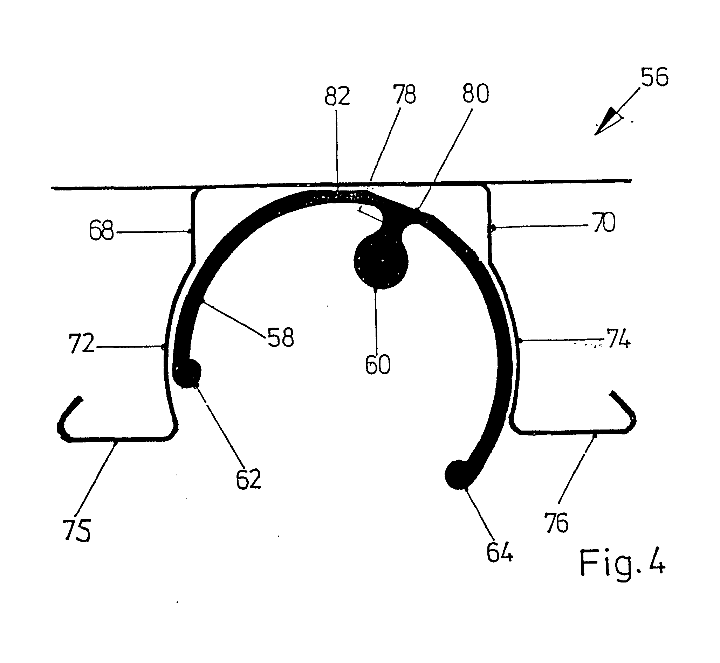

In den Fig. 3 und 4 ist ein von einer Halterung 56 aufgenommenes Profilteil 58 dargestellt, das im Schnitt eine im wesentlichen kreisbogenförmige Geometrie, die über einen Halbkreis hinausgeht, aufweist. Ferner ist im Scheitelbereich des Profilteils 58 von einer Innenfläche ausgehend ein Vorsprung 60 vorgesehen, der erwähntermaßen zum einen die Längssteifigkeit des Profilteils 58 erhöht und außerdem beim Zusammenwirken mit nicht dargestellten in den Innenraum des Profilteils 58 hineingreifenden Randabschnitten von Profilteilen zu einer weiteren Kammerbildung führt, durch die die zu reinigenden Fluide strömen müssen. Verstärkt werden kann die Kammerbildung dadurch, daß die Kanten 62, 64 des Profilteils 58 wulstartig ausgebildet werden. Das Halteelement 56 weist einen Aufbau wie den der Fig. 1 und 2 auf, besteht also auch aus einem plattenförmigen Basiselement 66, von dem zwei streifenförmige, Federeigenschaften aufweisende Abschnitte 68 und 70 abgewinkelt werden, die in den vertikal verlaufenden Bereichen 72, 74 die Außenfläche des Profilteils 58 zu dessen Festlegung abschnittsweise umfaßt. Die im wesentlichen waagerecht verlaufenden abgewinkelten Endabschnitte 75, 76 sind dabei so gewählt, daß sie einen Vorsprung -in Art des mit dem Bezugszeichen 60 versehenen- im Bereich dessen Verjüngung 78 erfassen. Hierdurch werden die mit den Außenflächen dem Fluide zugewandten Profilteile befestigt.

Ist durch die Konstruktion des Halteelementes 56 gewährleistet, daß das Profilteil 58 um seine Längsachse drehbar ist, so kann durch an der Außenfläche vorgesehene Abflachungen 80 (Fig. 3) bzw. 82 (Fig. 4) eine Lagefixierung gegeben sein. Hierdurch ist sichergestellt, daß ein unkontrolliertes Verdrehen der Profilteile nicht möglich ist. Ansonsten unterscheidet sich die Konstruktion der Fig. 4 von der der Fig. 3 nicht, so daß für gleiche Elemente gleiche Bezugszeichen gewählt sind.

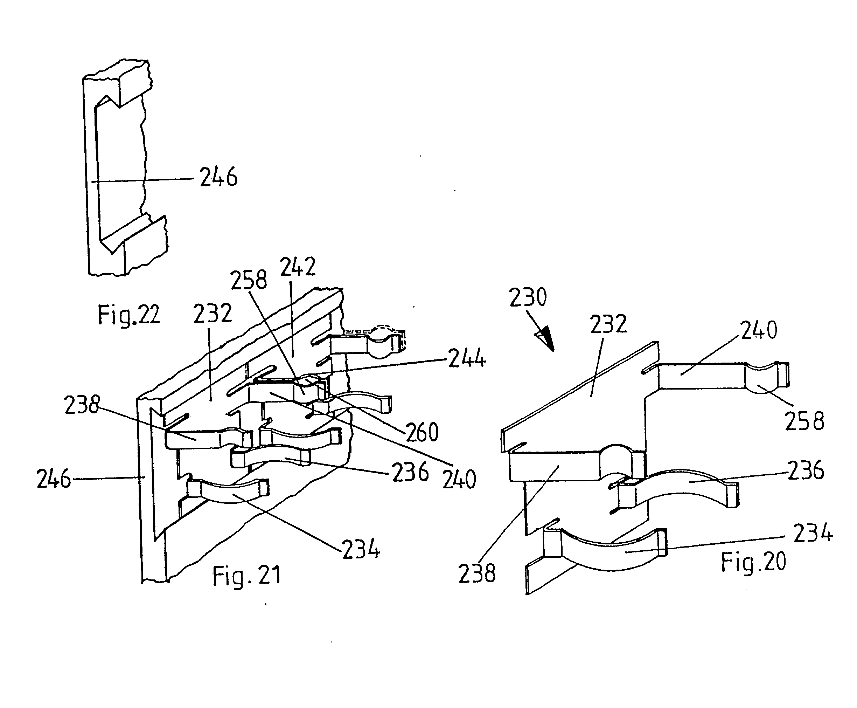

Den Fig. 20 bis 22 sind besonders hervorzuhebende Ausgestaltungen von Halterungen 230 zur Aufnahme von rinnenförmigen Profilteilen zu entnehmen, wobei der Grundgedanke der Ausführungsformen der Fig. 1 und 2 beibehalten wird. So gehen von einem Basiselement 232 bzw. 242 abgewinkelte Schenkel 234, 236, 238, 244 aus, die paarweise einander zugeordnet sind. So sind die Schenkel 234 und 236 einander zugeordnet, um ein nicht dargestelltes Profilteil, das den zu reinigenden Fluiden mit seiner Öffnung zugewandt ist, außenseitig teilweise zu umgreifen und damit festzuhalten. Demzufolge üben die Schenkel 234 und 236 die Funktion der Abschnitte 32 und 34 nach Fig. 1 aus. Die weiteren Schenkel 238 und 240 des Basiselementes 232 und der Schenkel 244 des Basiselementes 242 dienen dazu, die Vorsprünge der Profilteile aufzunehmen, deren Öffnungen zu den aufsteigenden und zu reinigenden Fluiden abgewandt sind. Um die inneren Vorsprünge der Profilteile zu erfassen, weisen die Endbereiche 258 und 260 der Schenkel 240 und 244 Verformungen auf, die der Geometrie des inneren Vorsprungs angepaßt sind. Die Endabschnitte 258 und 260 erfüllen folglich die Aufgabe der Bereiche 40 und 42 der Halterung nach Fig. 1.

Die Basiselemente 232 und 242 mit den abragenden Schenkeln 234, 236, 238, 240, 244 werden sodann in Aufnahmeschienen 246 aneinandergereiht, um so Profilteile lösbar aufzunehmen.

Dadurch, daß die in Reihen angeordneten Schenkeln — auf der einen Seite die Schenkel 234, 236, auf der anderen Seite die Schenkel 238, 240, 244 — stets nur Profilteilen einer Reihe zugeordnet sind, wird erkennbar, daß ein überaus problemloses Entfernen möglich ist, ohne daß erhebliche Kraftaufwendungen erforderlich sind, wie es bei der Konstruktion nach Fig. 1 der Fall sein könnte.

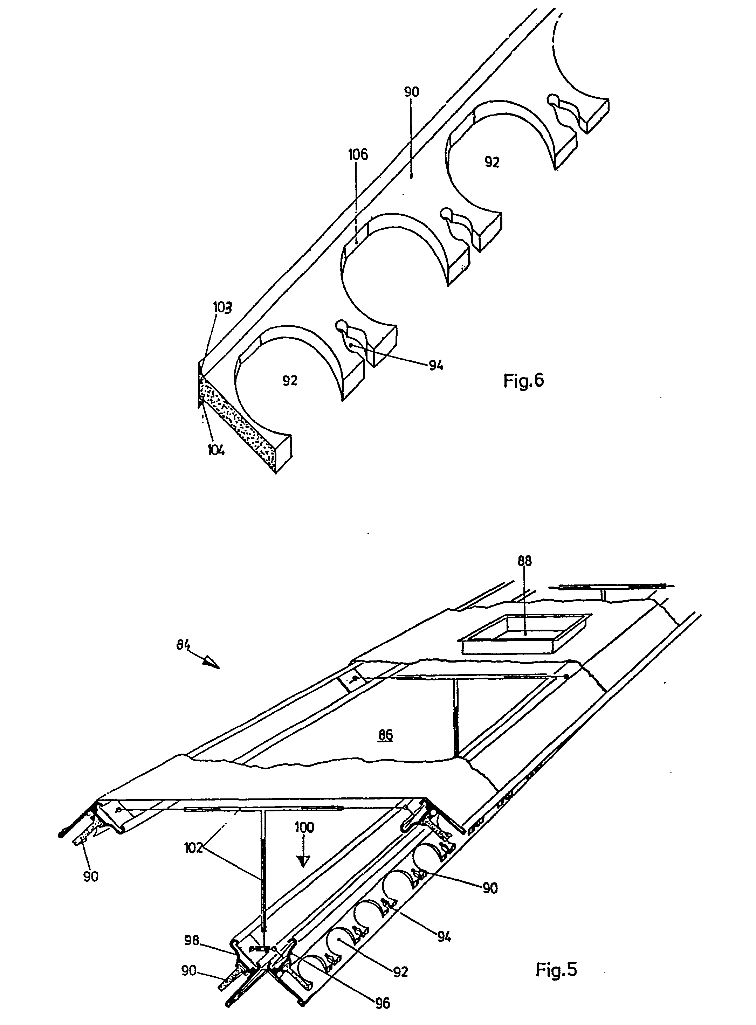

In Fig. 5 ist perspektivisch und im Ausschnitt ein Abscheider 84 rein schematisch wiedergegeben, bei dem nicht dargestellte Profilteile zu zwei Flächen zusammengesetzt sind, die einen spitzen Winkel zueinander einschließen. Mit anderen Worten weist der Abscheider 84 im Schnitt V-förmig zueinander ausgerichtete Abscheideflächen auf, durch die zu reinigende Fluide strömen, um über den Innenraum 86 des Abscheiders 84 einer Lüftungsöffnung 88 zugeführt zu werden, durch die die gereinigten Fluide abgesaugt werden. Die in dem Abscheider 84 benutzten Profilteile entsprechen denen der Fig. 1—4, so daß insoweit auf deren Geometrie verwiesen wird. Die die Profilteile aufnehmenden Halteelemente sind entgegen den zuvor beschriebenen Ausführungsformen in Art einer Profilleiste 90 ausgebildet, die einander abwechselnde Aussparungen 92 und 94 aufweist. Diese Aussparungen 92 und 94 sind so gewählt, daß abwechselnd ein Profilteil durch teilweises Umfassen der Außenfläche und das nachfolgende durch Aufnahme des innenliegenden Vorsprungs gehalten werden. Die Halteleisten 90 können dabei aus Gummi oder Kunststoff bzw. Stahlfedern bestehen, weisen also eine gewisse Federeigenschaft auf, so daß nicht nur ein sicheres, sondern auch ein geräuscharmes Halten der Profilteile erfolgt. Die Halteleisten 90 selbst können in Schienen 96 bzw. 98 von Halterungen 100 aufgenommen werden. Hierzu weisen die Halteleisten 90 im oberen Randbereich in einer Ebene verlaufende stegartige Schenkel 103 und 104 auf. (Selbstverständlich können die Halteleisten 90 auch durch die Halteelemente 26 bzw. 44 ausgetauscht werden und umgekehrt).

Wie die zeichnerische Darstellung der Fig. 5 verdeutlicht sind die die Halteleisten 90 aufnehmende Halteelemente über zum Beispiel ein Gestänge oder Seilzüge 102 derart miteinander gekoppelt, daß sie gleichsinnig derart verkippbar sind, daß der Neigungswinkel der aus den ineinandergreifenden Profilteilen gebildeten Fläche einstellbar ist.

Auch bei dem Abscheider 84 nach Fig. 5 ergibt sich der Vorteil, daß für die einzelnen Profilteile in Meterware vorhandene Profile benutzt werden können, die nur im gewünschten Umfang abzulängen sind. Der gesamte Abscheider 84 benötigt ferner keinen starren Rahmen mehr, wie er vom Stand der Technik bekannt ist. Auch sind die Profilteile lösbar im Abscheider 84 angeordnet, so daß ein problemloses Reinigen bzw. Erneuern möglich ist.

Schließlich verdeutlicht die Detaildarstellung der Halteleiste gemäß Fig. 6, daß im Scheitelbereich der Aussparung 92, in der die Profilteile eingebracht werden, deren Öffnung den Fluiden unmittelbar zugewandt sind, eine Abflachung 106 vorgesehen ist, um so die Profilteile positionsgenau festzulegen, die eine entsprechende Abflachung an der Außenfläche aufweisen, wie es im Zusammenhang mit dem Profilteil der Fig. 3 und 4 beschrieben worden ist.

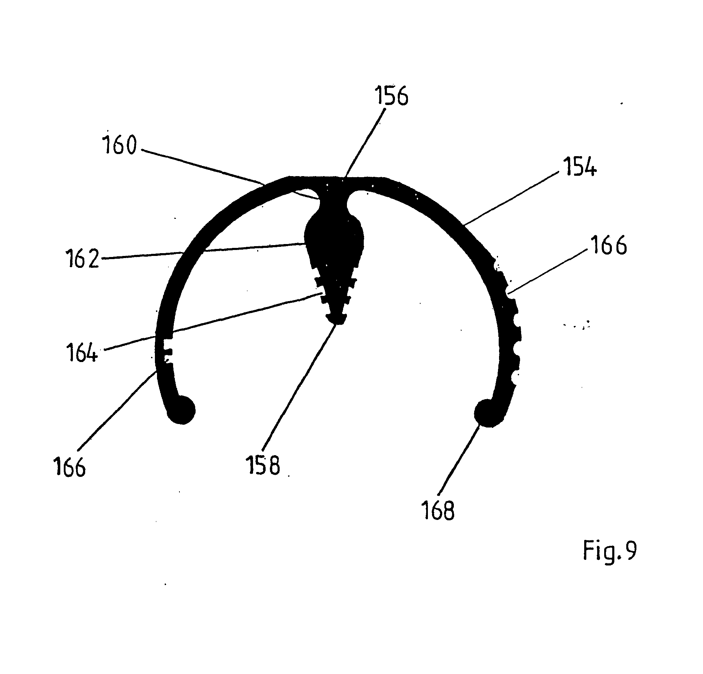

Eine Schnittdarstellung einer Ausführungsform eines weiteren erfindungsgemäßen Profilteils 154 ist der Fig. 9 zu entnehmen. Man erkennt, daß das Profilteil 154 eine Bogenform aufweist, dessen freie Kanten einanderzugewandt ausgebildet sind. Von der Innenfläche des Profilteils 154 geht ein in dessen Längsrichtung verlaufender Vorsprung 158 aus, wodurch eine weitere Unterteilung in Kammern des von dem Profilteil 154 umgebenden Raums bzw. der Räume erfolgt, die durch die weiteren in das Profilteil 154 eingreifenden Profilteile gebildet werden. Hierdurch erfolgt eine weitere Beeinflussung der Strömungsgeschwindigkeit der Fluide, wodurch sich wiederum der Abscheidegrad erheblich erhöht.

Im Ausführungsbeispiel weist der Vorsprung 158 im Schnitt eine Tropfenform aus, besteht also aus einem Hals 160 und einem sich anschließenden zuerst erweiternden und dann zur Spitze hin verjüngenden Hauptkörper 162. In dessen Außenfläche und vorzugsweise im Bereich des freien Endes befindet sich eine Profilierung, die beispielhaft in der zeichnerischen Darstellung in Form von Vorsprüngen und Aussparungen 164 wiedergegeben ist. Hierdurch wird eine zusätzliche Verwirbelung der vorbeiströmenden Fluide hervorgerufen, wodurch nicht nur der Abscheidegrad erhöht, sondern gleichzeitig eine Selbstreinigung der Außenfläche des Vorsprungs 158 bewirkt wird. Infolgedessen bedarf ein entsprechender aus den erfindungsgemäßen Profilteilen 154 aufgebauter Abscheider einer geringeren Wartung.

Eine entsprechende Profilierung kann auch auf der Innen- und/oder Außenfläche des Profilteils 154 vorgesehen sein. Diese kann ebenfalls durch Vorsprünge bzw. Aussparungen 166 oder Winkel zueinander beschreibende Flächenabschnitte gebildet werden.

Schließlich ist darauf hinzuweisen, daß die freien Kanten des Profilteils 154 verstärkt, wie zum Beispiel wulstartig ausgebildet sind, wodurch eine zusätzliche Beeinflussung der Geschwindigkeit der vorbeiströmenden Fluide erfolgt.

Auch das Profilteil gemäß der Fig. 9 kann lösbar in einem Rahmen angeordnet werden. Um ein unkontrolliertes Verdrehen zu vermeiden, ist eine Abflachung 156 vorgesehen. Selbstverständlich können die Profilteile 154 auch fest, also nicht lösbar in einen Rahmen eingebracht werden. Hierdurch werden die wesentlichen, die Erfindung charakterisierenden Merkmale und Vorteile nicht verlassen. Ausschlaggebend hierfür ist nämlich, daß in dem Profilteil 154 ein weiterer vorzugsweise vom Mittenbereich nach innen ragender Vorsprung 158 vorgesehen ist, wodurch zusätzliche Kammerbildungen erfolgen, die die Geschwindigkeit der durchströmenden Fluide dahingehend beeinflussen, daß ein erhöhter Abscheidegrad und damit Reinigung dieser gewährleistet ist.

Weitere Ausführungsformen der Gestaltung von Profilteilen sind den Fig. 10—16 zu entnehmen.

So sind die Profilteile 170 gemäß Fig. 10 als Hohlprofile ausgebildet, wobei der entlang der Längsachse verlaufende Vorsprung 172 ebenfalls hohl ist. Entsprechende Profilteile 170 können gegebenenfalls von Medien einstellbarer Temperatur durchströmt werden, um gezielt ein Abscheiden von Partikeln oder Fluiden innerhalb der Profilteile 10 an gewünschten Stellen zu erzielen, so daß eine Reinigung zusätzlich erleichtert wird.

Das Profilteil 174 nach Fig. 11 ist im Querschnitt als V-förmig zu bezeichnen, wobei die Ränder 176, 178 der einander zugewandten Profilteile parallel zueinander verlaufen können. Die inneren Vorsprünge 180, 182 und 184 können dabei verschiedene Geometrien aufweisen, also z.B. in ihrem freien Endbereich eine Rechteckform, eine Kreisform oder eine Tropfenform zeigen. Die vorderen Enden gehen dabei jeweils über einen Steg von der Innenfläche des Profilteils 174 aus.

Die Möglichkeit, die Profilteile auch eckig auszubilden, ist durch die Fig. 12 und 13 verdeutlicht. So weisen die Profilteile 185 nach Fig. 12 im Schnitt eine kantige U-Form auf, wobei die freien Enden 186 und 188 der Seitenschenkel 190 und 192 nach innen abgewinkelt sind und in einer Ebene verlaufen. Hierdurch ergibt sich ebenfalls eine Kammerbildung von zwei ineinandergreifenden Profilteilen 185.

Die Profilteile 194 nach Fig. 13 weisen eine reine kantige U-Form auf, wobei die inneren Vorsprünge 196, 198 bzw. 200 verschiedene Geometrien zeigen können. So kann neben einem einfachen parallel zu den Seitenschenkel verlaufenden Steg 196 auch eine Form gewählt werden, bei der der Steg in eine im Schnitt kreisförmige (Bezugszeichen 200) bzw. rhombusartige (Bezugszeichen 198) Konfiguration übergeht.

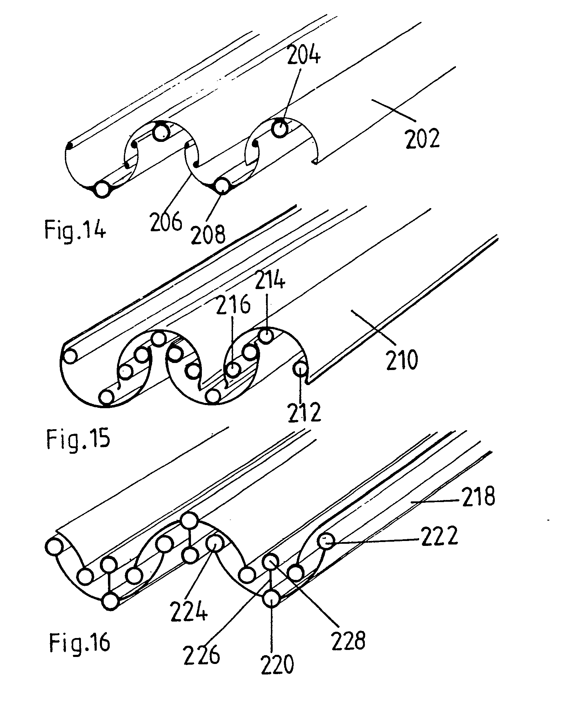

Auf die Ausführungsformen der Fig. 14 und 16 ist ebenfalls nachdrücklich hinzuweisen.

So sind die Profilteile 202 im wesentlichen in ihrer Gestalt denen z.B. der Fig. 4 und 9 nachgebildet. Allerdings wird der innere Vorsprung 204 durch ein rohrförmiges in Längsrichtung des Profilteils 202 erstreckendes Element gebildet, das gegebenenfalls von einem Medium einstellbarer Temperatur durchströmt werden kann. Dabei kann das Element, das den Vorsprung 204 bildet, von der Innenfläche des Profilelementes 202 ausgehen oder aber auch vollständig in dem Rohr integriert sein, wie es bei dem Profilteil 206 mit dem inneren Vorsprung 208 angedeutet ist.

Ferner besteht die Möglichkeit, die inneren Vorsprünge nicht notwendigerweise als intergrale Bestandteile der Profilteile auszubilden, vielmehr Profilteile 210 — zum Beispiel stranggepreßte bogenförmige Profilteile- über Rohre 212, 214 und 216 zu legen, über diese zu rasten, um die gleiche Wirkung zu erzielen, die durch die erfindungsgemäße Lehre erzielt werden soll. Durch die Rohre 212, 214 und 216 und das sich über diese erstreckende Profilteil 210 ergibt sich im wesentlichen eine Geometrie entsprechend der Fig. 4, wobei zusätzlich der Vorteil erzielt ist, daß die Rohre 212, 214 und 216 von Fluiden durchströmbar sind.

In Fig. 16 sind Profilteile 218 dargestellt, die im Mittenbereich und in den Randbereichen rohrförmige Elemente 220, 222 und 224 aufweisen, wobei von dem mittleren Element 220 über einen Steg 226 ein weiteres Rohr 228 entlang der Längsachse des Profilteiles 218 verläuft, um so den inneren Vorsprung zu bilden.

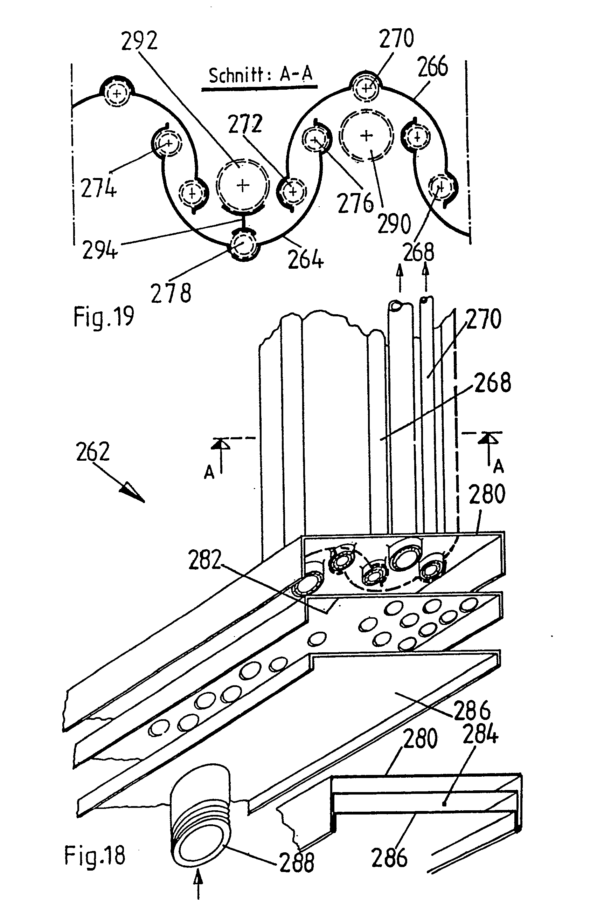

Den Fig. 18 und 19 ist eine weitere hervorzuhebende Ausführungsform eines erfindungsgemäßen Abscheiders 262 zu entnehmen, der aus bogenförmigen Profilteilen 264 und 266 besteht, die ihrerseits hinsichtlich der Temperatur einstellbar sind. Hierzu sind Rohrelemente 268, 270, 272 bzw. 274, 276 und 278 auf einem Kreisabschnitt angeordnet, um durch Aufklipsen der Profilteile 264 und 266 mit diesen in innige Berührung zu gelangen. Die Profilelemente 264 und 266 sind dabei vorzugsweise stranggepreßt oder gerollt und bestehen aus Aluminium. Durch die Rohrelemente 268, 270, 272, 274, 276 und 278 kann nun ein Medium einstellbarer Temperatur strömen, wie zum Beispiel Wasser oder aber auch ein Gas. Um die Rohrelemente 268 bis 278 problemlos mit dem Medium zu beschicken, sind jene stirnseitig in zum Beispiel ein Blechelement 280 eingelötet. Sodann wird ein Lochblech 282 derart den stirnseitigen Öffnungen der Rohre 268 bis 278 zugeordnet, daß aus einem sich anschließenden als Kammer 284 zu bezeichnenden Zwischenraum, der seinerseits von einem geschlossenen Blechelement 286 verschlossen wird, Medien gewünschter Temperatur in die Rohrelemente 268 bis 278 strömen können.

Die zusammengesetzten Elemente 280, 282 und 286, die erwähntermaßen an den Stirnenden der Profilteile 266 und 264 bzw. der Rohrelemente 268 bis 278 verlaufen, sind im unteren Teil der Fig. 18 dargestellt. In der darüber vorhandenen Explosionsdarstellung sind die einzelnen Blechelemente 280, 282 und 286 auseinandergezogen dargestellt. Man erkennt dabei, daß das Element 286 eine Einlaßöffnung 288 aufweist, durch die die Medien in die Kammer 284 und damit in die Rohrelemente 268 bis 278 strömen können.

Wie die Fig. 19 des weiteren verdeutlicht, kann zwischen den sich überlappenden Profilteilen 264 und 266 ein weiteres rohrförmiges Element 290 bzw. 292 angeordnet sein, das ebenfalls in der Kammer 284 mündet, um mit einem Medium einstellbarer Temperatur durchströmt zu werden. Durch die zusätzlichen Rohrelemente 290 und 292 kann der Abscheidegrad zusätzlich erhöht werden.

Da die Rohrelemente 290 und 292 ebenfalls von den stirnseitig angeordneten Halteelementen 280 bis 282 ausgehen, können diese frei zwischen den Profilteilen und zu diesen beabstandet angeordnet oder aber — wie das Profilteil 292 — über ein stegförmiges Element 294 mit den mittigen Rohrelementen 268 verbunden werden. Die Elemente 290 und 292 üben dabei im wesentlichen die Funktion des inneren Vorsprungs aus, wie zuvor anhand zahlreicher Ausführungsbeispiele beschrieben worden ist.

Die Ausführungsformen der Fig. 18 und 19 zeigen den Vorteil, daß die Profilteile 264 und 266 lösbar mit den Rohrelementen 268 bis 278 verbunden sind, so daß jene problemlos entfernt und damit gereinigt werden können. Auch können Abscheider gewünschter Flächen problemlos hergestellt werden, da die Einzelelemente nur im erforderlichen Umfang abgelängt werden müssen, um anschließend mit den stirnseitig verlaufenden Halteelementen wie Blechelementen 280 und 282 verbunden zu werden.

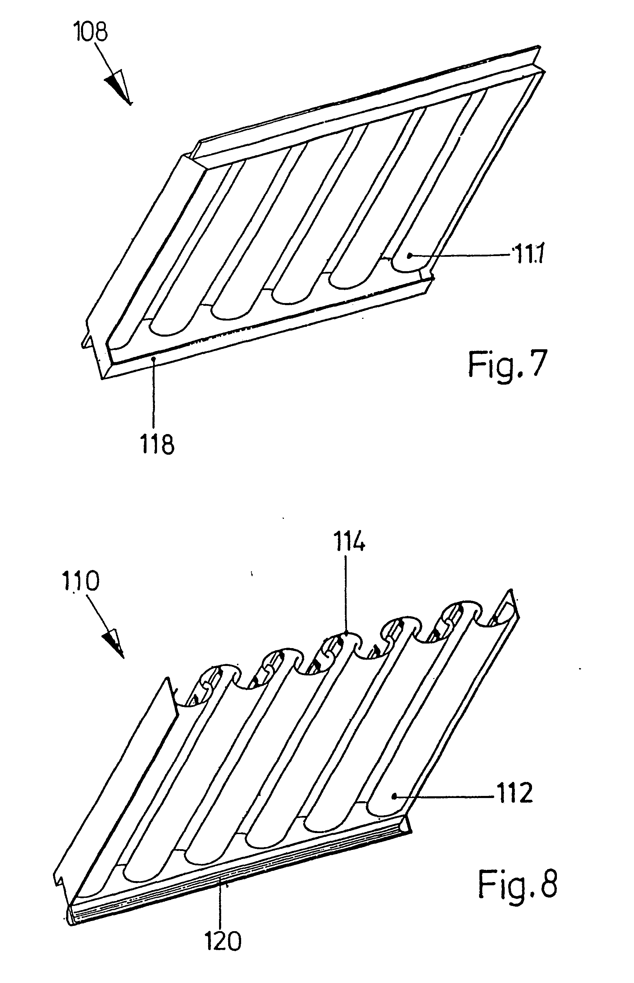

Die Fig. 7 und 8 sollen eine weitere Ausführungsform von Abscheidern 108 bzw. 110 darstellen, die in Bezug auf die aufsteigenden zu reinigenden Fluide geneigt angeordnet sein können. Im unteren Bereich 111 bzw. 112 der ineinandergreifenden im vorliegenden Fall im Schnitt Elipsenausschnitte darstellenden Profilteile 114 bzw. 116 befindet sich ein Sammelraum 118 bzw. 120, in dem Schmutz wie zum Beispiel abgeschiedenes Öl gesammelt werden kann. Zum Reinigen des Abscheiders 108 bzw. 110 muß dann nur die abgeschiedene Flüssigkeit abgelassen werden, ohne daß die Profilteile 114, 116 selbst notwendigerweise gereinigt werden müssen. Hierdurch ist ein entscheidender Vorteil gegenüber herkömmlichen Abscheiderplatten gegeben. Bei diesen -ob Gestrickfilter oder Wirbelabscheiderplatten- läuft das Fett in das Innere des Gehäuses, um von dort abgelassen zu werden. Dies ist jedoch kaum möglich, da das Fett in dem Gehäuse aushärtet und das Ablasselement verklebt.

Auch ist bei den üblichen Konstruktionen eine erhebliche Brandgefahr im Gehäuse hinter dem Filterelement gegeben. Nach dem erfindungsgemäßen Vorschlag läuft das Fett nach außen und kann so problemlos entfernt werden.

Als weiterer Vorteil der Erfindung ist zu nennen, daß die Profilteile zu Abscheiderplatten zusammengesetzt werden können, um in bekannte Rahmen oder Hauben eingesetzt zu werden. Dabei bleiben jedoch die zuvor beschriebenen Eigenschaften der lösbaren Anordnung der Profilteile, gegebenenfalls deren Verstellbarkeit oder das Sammeln von z.B. Fett beibehalten.

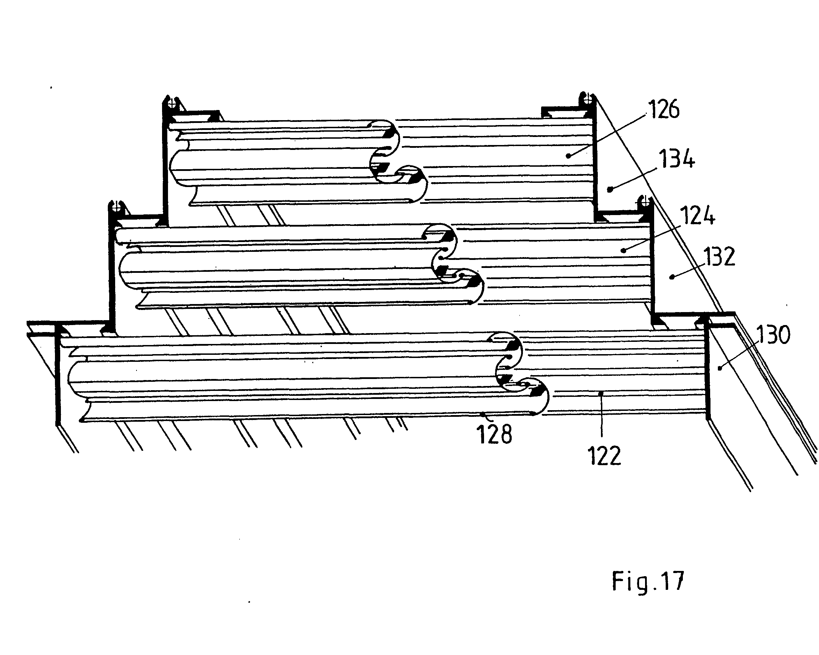

Insbesondere ist eine Ausführungsform hervorzuheben, die der Fig. 17 zu entnehmen ist. So sind in verschiedenen Ebenen 122, 124 und 126 übereinander angeordnete erfindungsgemäß ausgebildete Profilteile in Reihen angeordnet, um eine mehrstufige Abscheidung zu ermöglichen. Dabei sind die in den einzelnen Ebenen 122, 124 und 126 angeordneten Profilteile 128 lösbar in Rahmenelementen 130, 132 und 134 angeordnet, so daß ein problemloses Reinigen möglich ist. Durch die Ausführungsform der Fig. 17 ergibt sich eine Kaskadenanordnung, die gewährleistet, daß das aus der obersten Ebene 126 heraustretende Fluid vollständig gereinigt ist.

## Patentansprüche

1. Abscheider für gasförmige Fluide wie Kühlfluide, Ölnebel, Fettnebel, Schmutzpartikel aufweisende Luft mit in zumindest zwei gegenüberliegenden Reihen angeordneten im Querschnitt offenen, rinnenförmigen ersten und zweiten Profilteilen (10, 12, 58, 114, 116, 128, 154, 170, 174, 185, 194, 202, 206, 210, 218) wobei die freien Längskanten der Ränder der ersten Profilteile die freien Längskanten der Ränder der zweiten Profilteile überlappen, dadurch gekennzeichnet, daß das Profilteil (10, 12, 58, 114, 116, 128, 154, 170, 174, 185, 194, 202, 206, 210, 218) zur Bildung von Kammern (22, 24) einen im Scheitelbereich der Innenfläche ausgehenden sich in Richtung der Profilteilöffnung und entlang seiner Längsachse verlaufenden Vorsprung (20, 46, 58, 158, 172, 180, 182, 185, 196, 198, 200, 204, 208, 214, 228) aufweist.

2. Abscheider nach Anspruch 1, dadurch gekennzeichnet, daß der Vorsprung (20, 46, 158, 172, 180, 182, 185, 196, 198, 200, 204, 208, 214, 228) im Abstand zu seinem äußeren Ende eine Verjüngung (78, 160, 226) umd im Querschnitt vorzugsweise eine Tropfen- oder Knaufform aufweist.

3. Abscheider nach Anspruch 1, dadurch gekennzeichnet, daß der Vorsprung (158) zumindest abschnittsweise entlang seiner Außenfläche profiliert ist.

4. Abscheider nach Anspruch 1, dadurch gekennzeichnet, daß die Innen- und/oder Außenfläche des Profilteils (154) zumindest abschnittsweise profiliert ist und/oder zumindest abschnittsweise Aussparungen (166), Vorsprünge oder einen Winkel zueinander beschreibende Flächenabschnitte aufweist.

5. Abscheider nach Anspruch 1, dadurch gekennzeichnet, daß die Kanten des Profilteils (10, 12, 58, 154, 210, 218) verstärkt wie z.B. wulstartig ausgebildet sind.

6. Abscheider für gasförmige Fluide wie Kühlfluide, Ölnebel, Fettnebel, Schmutzpartikel aufweisende Luft mit in zumindest zwei gegenüberliegenden Reihen angeordneten im Querschnitt offenen, rinnenförmigen ersten und zweiten Profilteilen, wobei die freien Längskanten der Ränder der ersten Profilteile die freien Längskanten der Ränder der zweiten Profilteile überlappen, dadurch gekennzeichnet, daß das Profilteil (10, 12, 58, 114, 116, 128, 154, 170, 174, 185, 194, 202, 206, 210, 218) lösbar in dem Abscheider angeordnet ist.

7. Abscheider nach Anspruch 1 oder 6, dadurch gekennzeichnet, daß das Profilteil (10, 12, 58, 114, 116, 128, 154, 170, 174, 185, 194, 202, 206, 210, 218) drehbar um seine Längsachse anordbar ist und vorzugsweise an der Außenfläche zu dessen Festlegung zumindest eine Abflachung (80, 156) aufweist.

8. Abscheider nach Anspruch 1, dadurch gekennzeichnet, daß die von den zuerst von den Fluiden beaufschlagten Profilteile (10, 54) ausgehenden inneren Vorsprünge (46, 58) zum Halten der Profilteile in einer Aussparung eines Halteelementes eingreifen.

9. Abscheider nach Anspruch 1, dadurch gekennzeichnet, daß der Abscheider (108, 110) geneigt angeordnet und im Bereich der unteren freien Enden der Profilteile (114, 116) ein für abgeschiedene Stoffe bestimmte vorzugsweise abnehmbares Sammelelement (118, 120) aufweist.

10. Abscheider nach Anspruch 1, dadurch gekennzeichnet, daß die Profilteile (10, 12, 58) von einer Halterung aufgenommen sind, die aus aneinanderreihbaren Einzelelementen (25, 44, 56, 230) besteht, die jeweils von einem Basiselement (26, 66, 232) ausgehende und zu diesem abgewinkelte und Federeigenschaften aufweisende streifenförmige erste und zweite Abschnitte (28, 30, 72, 73, 234, 236, 238, 240, 244) umfassen, wobei die ersten Abschnitte (234, 236) die mit den Öffnungen den aufsteigenden Fluiden zugewandten Profilteile von außen teilweise umfassen und die zweiten Abschnitten (238, 240, 244) mit ihren Endbereichen (40, 42, 258, 260) die inneren Vorsprünge (46) der mit ihren Außenflächen den aufsteigenden Fluiden zugewandten Profilteilen (10) zu deren Befestigung aufnehmen.

11. Abscheider nach Anspruch 1 oder 6, dadurch gekennzeichnet, daß die Profilteile (10, 12, 58, 114, 116, 128, 154, 170, 174, 185, 194, 202, 206, 210, 218) im Schnitt bogenförmig, U-förmig oder V-förmig ausgebildet sind und gegebenenfalls der Vorsprung (172, 204, 214, 228) und/oder die Profilteile (170) hohl ausgebildet sind.

12. Abscheider nach Anspruch 1 oder 6, dadurch gekennzeichnet, daß das Profilteil (202, 210, 218) durch mediendurchströmbare fest oder lösbar mit dem Profilteil verbindbare Rohrelemente (204, 208, 212, 214, 216, 220, 222, 224, 226, 228) kühlbar ist, von denen eines den Vorsprung (204, 208, 214, 228) bildet.

13. Abscheider nach Anspruch 8, dadurch gekennzeichnet, daß Halteelemente abschnittsweise die Außenflächen der Profilteile zumindest teilweise umfassen, deren Öffnungen den aufsteigenden Fluiden unmittelbar zugewandt sind.

**Revendications**

1. Séparateur pour fluide gazeux tel que fluide de réfrigération, brouillard d'huile, brouillard de graisse, air contenant des particules de poussière avec des premières et des deuxièmes parties profilées (10, 12, 58, 114, 116, 128, 154, 170, 174, 185, 194, 202, 206, 210, 218) en forme de gouttières, de section transversale ouverte, disposées en au moins deux rangées opposées, les arêtes longitudinales libres des bords des premières parties profilées chevauchant les arêtes longitudinales libres des bords des deuxièmes parties profilées, caractérisé en ce qu'afin de former des chambres (22, 24), la partie profilée (10, 12, 58, 114, 116, 128, 154, 170, 174, 185, 194, 202, 206, 210, 218) présente une saillie (20, 46, 58, 158, 172, 180, 182, 196, 198, 200, 204, 208, 214, 228) qui part de la zone de sommet de la surface intérieure, en direction de l'ouverture de la partie profilée, et qui s'étend le long de son axe longitudinal.

2. Séparateur selon la revendication 1, caractérisé en ce que la saillie (20, 46, 158, 172, 180, 182, 185, 196, 198, 200, 204, 208, 214, 228) présente, à distance de son extrémité extérieure, un rétrécissement (78, 160, 226) et présente une section transversale de préférence en forme de goutte ou de bouchon.

3. Séparateur selon la revendication 1, caractérisé en ce que la saillie (158) est au moins profilée par endroits le long de sa face extérieure.

4. Séparateur selon la revendication 1, caractérisé en ce que la face intérieure et extérieure de la partie profilée (154) est au moins profilée par endroits et/ou présente au moins des évidements (166), des saillies ou des parties de surface faisant entre elles un angle.

5. Séparateur selon la revendication 1, caractérisé en ce que les arêtes de la partie profilée (10, 12, 58, 154, 210, 218) sont renforcées, comme par exemple en forme de bourrelet.

6. Séparateur pour fluide gazeux tel que fluide de réfrigération, brouillard d'huile, brouillard de graisse, air contenant des particules de poussière avec des premières et des deuxièmes parties profilées en forme de gouttières, de section transversale ouverte, disposées en au moins deux rangées opposées, les arêtes longitudinales libres des bords des premières parties profilées chevauchant les arêtes longitudinales libres des bords des deuxièmes parties profilées, caractérisé en ce que la partie profilée (10, 12, 58, 114, 116, 128, 154, 170, 174, 185, 194, 202, 206, 210, 218) est disposée de manière démontable dans le séparateur.

7. Séparateur selon la revendication 1, caractérisé en ce que la partie profilée (10, 12, 58, 114, 116, 128, 154, 170, 174, 185, 194, 202, 206, 210, 218) peut être disposée de manière à pouvoir tourner sur son axe longitudinal et présente de préférence au moins un aplatissement (80, 156) sur la face extérieure, en vue de sa fixation.

8. Séparateur selon la revendication 1, caractérisé en ce que les saillies intérieures (46, 58) partant des parties profilées (10, 54) qui sont les premières sollicitées par les fluides s'engagent dans un évidement d'un élément de maintien pour maintenir les parties profilées.

9. Séparateur selon la revendication 1, caractérisé en ce que le séparateur (108, 110) est disposé incliné et présente dans la zone des extrémités inférieures libres des parties profilées (114, 116) un élément de récolte (118, 120) qui est de préférence extractible et qui est déterminé pour les substances déposées.

10. Séparateur selon la revendication 1, caractérisé en ce que les parties profilées (10, 12, 58) sont supportées par une fixation qui se compose d'éléments individuels (25, 44, 56, 230) alignables les uns dans les autres, qui comprennent des premières et des deuxièmes parties (28, 30, 72, 73, 234, 236, 238, 240, 244) en forme de bandes, qui partent chaque fois d'un élément de base (26, 66, 232) et repliées par rapport à celui-ci et qui présentent des propriétés élastiques, les premières parties (234, 236) qui entourent partiellement de l'extérieur, avec les ouvertures, les parties profilées tournées vers les fluides qui montent et les deuxièmes parties (238, 240, 244) recueillant, en vue de leur fixation, les saillies intérieures (46) des parties profilées (10) dont les faces extérieures sont tournées vers les fluides qui montent.

11. Séparateur selon la revendication 1 ou 6, caractérisé en ce que les parties profilées (10, 12, 58, 114, 116, 128, 154, 170, 174, 185, 194, 202, 206, 210, 218) présentent une coupe en forme d'arc, de U ou de V et la saillie (172, 204, 214, 228) et/ou les parties profilées (170) étant le cas échéant creuses.

12. Séparateur selon la revendication 1 ou 6, caractérisé en ce que la partie profilée (202, 210, 218) est susceptible d'être refroidie au moyen d'éléments tubulaires (204, 208, 212, 214, 216, 220, 222, 224, 226, 228) susceptibles d'être parcourus par des fluides et pouvant être reliés rigidement ou de manière démontable à la partie profilée, l'un des éléments tubulaires formant la saillie (204, 208, 214, 228).

13. Séparateur selon la revendication 8, caractérisé en ce que des éléments de maintien entourent au moins partiellement par endroits les faces extérieures des parties profilées dont les ouvertures sont directement tournées face aux fluides qui montent.

**Claims**

1. Separator for gaseous fluids such as cooling liquids, oil mist, fat mist, air containing dirt particles with first and second section parts (10, 12, 58, 114, 116, 128, 154, 170, 174, 185, 194, 202, 206, 210, 218) arranged in at least two opposite rows, said section parts being open and trough-shaped in cross section, the free longitudinal edges of the first section parts overlap with the free longitudinal edges of the second section parts, characterized in that, in order to form chambers (22, 24), the section part (10, 12, 58, 114, 116, 128, 154, 170, 174, 185, 194, 202, 206, 210, 218) has a protrusion (20, 46, 58, 158, 172, 180, 182, 185, 196, 198, 200, 204, 208, 214, 228) emanating from the apex region of the inner surface and extending towards the opening of the section part and along its longitudinal axis.

2. Separator according to Claim 1, characterized in that, the protrusion (20, 46, 158, 172, 180, 182, 185, 196, 198, 200, 204, 208, 214, 228) has a tapering (78, 160, 226) in the distance to its end and the protrusion is preferably drop- or knob-shaped.

3. Separator according to Claim 1, characterized in that, the protrusion (158) is at least sectionally texturized on its exterior surface.

4. Separator according to Claim 1, characterized in that, the inner- and/or outer surface of the section part (154) is at least sectionally texturised, and/or has at least sectionally recesses (166), protrusions, or surface areas describing angles to each other.

5. Separator according to Claim 1, characterized in that, the edges of the section part (10, 12, 58, 154, 210, 218) are reinforced, e.g., bulged.

6. Separator for gaseous fluids such as cooling liquids, oil mist, fat mist, air containing dirt particles with first and second section parts arranged in at least two opposite rows, said section parts being open in cross section and trough-shaped, the free longitudinal edges of the first section parts overlap with the free longitudinal edges of the second section parts, characterized in that, the section part (10, 12, 58, 114, 116, 128, 154, 170, 174, 185, 194, 202, 206, 210, 218) is detachable arranged in the separator.

7. Separator according to Claim 1 or 6, characterized in that, the section part (10, 12, 58, 114, 116, 128, 154, 170, 174, 185, 194, 202, 206, 210, 218) is adapted to revolve around its longitudinal axis and preferably has a flattening (80, 156) on the outer surface for its fixation.

8. Separator according to Claim 1, characterized in that, the inner protrusions (46, 58) emanating from the section parts (10, 54) are directly facing the ascending fluids and engage in a recess of a holding element in order to fix the section parts.

9. Separator according to Claim 1, characterized in that, said separator (108, 110) is inclingly arranged and in the region of the lower free ends of the section parts (114, 116), the separator is provided with a preferably detachable collecting element (118, 120) adapted to receive substances precipitated from said fluids.

10. Separator according to Claim 1, characterized in that, the section parts (10, 12, 58) are fixed by a holding element comprising single elements (25, 44, 56, 230) adapted to be placed in a row, said single elements comprising first and second strip-like sections (28, 30, 72, 73, 234, 236, 238, 240, 244) emanating from a base element and angled to said base element, said strip-like sections have spring properties, said first sections (234, 236) partly encircle the section parts with their openings facing the ascending fluids and the second sections (238, 240, 244) hold with their end sections (40, 42, 258, 260) the inner protrusions (46) of the section parts (10) facing the ascending fluids with their outer surfaces to fix said section parts.

11. Separator according to Claim 1 or 6, characterized in that, the section parts (10, 12, 58, 114, 116, 128, 154, 170, 174, 185, 194, 202, 206, 210, 218) are arch, U, or V shaped in cross section and opionally the protrusion (172, 204, 214, 228) and/or the section parts (170) are of hollow construction.

12. Separator according to Claim 1 or 6, characterized in that, the section part (202, 210, 218) is adapted to be cooled off by fluids flowing through pipe elements (204, 208, 212, 214, 216, 220, 222, 224, 226, 228), said pipe elements are connected in a fixed or detachable manner to the section part. One of said pipe elements is the protrusion (204, 208, 214, 228).

13. Separator according to Claim 8, characterized in that, holding elements sectionally encircle at least partly the outer surfaces of the section parts with their openings directly facing the ascending fluids.

EP 0 206 204 B1

Fig. 2

Fig. 1

1

Fig.3

EP 0 206 204 B1

Fig. 4

EP 0 206 204 B1

Fig.6

Fig.5

4

Fig.7

Fig.8

Fig. 9

EP 0 206 204 B1

170

172

Fig.10

180    176    178

184

174

182

Fig.11

188    186

190

185

192

Fig.12

200    198    196

194

Fig.13

Fig.14

Fig.15

Fig.16

Fig.17

Schnitt: A-A

Fig.19

Fig.18

Fig.20

Fig.21

Fig.22